(19) Europäisches Patentamt
European Patent Office
Office européen des brevets

(11) Publication number: 0 246 874 A2

(12) # EUROPEAN PATENT APPLICATION

(21) Application number: 87304474.7

(51) Int. Cl.4: C 08 L 81/04

(22) Date of filing: 20.05.87

(30) Priority: 21.05.86 GB 8612400

(43) Date of publication of application: 25.11.87 Bulletin 87/48

(84) Designated Contracting States: BE DE FR GB IT NL

(71) Applicant: EVODE LIMITED
Common Road
Stafford, ST16 3EH (GB)

(72) Inventor: Whitehouse, Robert Sydney
174, Doxey
Stafford, ST16 1EQ (GB)

(74) Representative: Lishman, Peter David
Aston Farm House Newtown Lane Shustoke
Coleshill Warwickshire B46 2SD (GB)

(54) **Liquid polymers.**

(57) A modified liquid polymer is produced by blending at least one mercaptan-terminated liquid polymer having functional (e.g. polysulphide) linkages in the backbone with an aqueous latex or dispersion of at least one high molar mass mercaptan-terminated solid linear polysulphide rubber and removing the water to form a solution of the solid component in the liquid component. The modified liquid polymers and industrial compositions containing them are useful, for example, as sealants, adhesives and moulding compounds. The modified liquid polymers retain cross-linkable mercaptan terminations and may themselves be cross-linked to produce new cross-linked polymers which are useful for similar purposes.

EP 0 246 874 A2

**Description**

## LIQUID POLYMERS

Liquid polymers have many applications in industry, for example in sealants, adhesives and moulding compounds. Prominent amongst these liquid polymers are the liquid polysulphides.

Polysulphides are commercially available as solid rubbers, having average molar masses ranging upwardly from about 50,000 and as liquids, having average molar masses in the range from about 1,000 to 8,000. The high molar mass solid rubber forms are prepared as aqueous suspensions by condensation between dihalide monomers and sodium polysulphide. They can be reduced by reaction with sodium hydrogen sulphide and sodium hydrogen sulphite to produce the liquid forms. Details of these reactions are given in a paper by A.M. Usmani in "Polymer News", 1985, Volume 10, Number 8, pages 231 to 236.

The average structure of the liquid polymers produced by such reactions is :
$HS\text{-}(C_2H_4\text{-}O\text{-}CH_2\text{-}O\text{-}C_2H_4\text{-}S\text{-}S\text{-})_n\text{-}C_2H_4\text{-}O\text{-}CH_2\text{-}C_2H_4SH$ This type of polymer has terminal mercaptan (or thiol) groups but also has disulphide linkages within the backbone. Examples of polymers having this general structure are sold under the Trade Mark "LP" by Thiokol Chemicals and Morton Thiokol Inc. In these commercially-available polymers, a small quantity of crosslinking monomer, usually 1,2,3 trichloropropane, is added, usually in the range 0.5 to 2 per cent, although concentrations up to 5 per cent have been reported.

Other liquid mercaptan-terminated polymers having functional linkages in teh backbone are known. Examples are "PM Polymer", sold by Phillips Petroleum, "Permapol PRC", sold by Elf Aquitaine and "Baythiol", sold by Bayer AG. These polymers differ from the liquid polysulphides by the structure of the backbone. In PM Polymer the backbone is based on a condensate of polyethylene oxide and propylene oxide. Permapol PRC has a urethane backbone.

This invention concerns the modification of liquid mercaptan-terminated polymers having functional linkages in the backbone, such as the liquid polysulphides and the other liquid polymers mentioned in the two preceding paragraphs, which will, for convenience, be referred to herein as "liquid polymers of the kind described".

The terminal mercaptan groups of liquid polymers of the kind described are easily cross-linkable by means of epoxide resins, inorganic or organic oxidizing agents or isocyanates. The exact mechanism of the reactions is not fully understood, but their results may be expressed as follows :

```
         O                       OH
        / \                     /
RSH + CH2-CH2-R1  ---> R-S-CH2-CH2-R1


    2RSH + [O] ---> R-S-S-R + H2O


                             O
                             ||
     RSH + R1NCO ---> R1-NH-C-S-R
```

Liquid polymers of the kind described, crosslinked by their mercaptan terminations, are widely used for the purposes mentioned, but they suffer from low cohesive strength. Those whose structure includes disulphide linkages also display poor creep resistance. The low cohesive strength is due to the low level of chain branching (about 0.5 to 2 per cent in the liquid polysulphides). The poor creep resistance is due to cleaving of the functional linkages in the backbone, which reform under mechanical stress into a lower thermodynamically stable environment, relieving internal stresses. Modification by means of this invention provides polymers with improved properties.

Improved properties could be obtained by blending liquid polymers of the kind described with higher molar mass solid polysulphides and cross-linking the resulting modified liquid polymer. However, substantial energy input, by high shear mixing and heating, is required to obtain satisfactory blends. This requires conventional rubber-processing machinery. The energy input is likely to cause cleaving of the disulphide linkages in the solid polysulphides, producing lower molar mass species, so this is not a commercially viable method of producing such modified liquid polymers. This invention provides an improved method.

According to the invention a method of producing a modified liquid polymer is characterised by the steps of blending a liquid polymer component comprising at least one liquid polymer of the kind described with an aqueous latex or dispersion of a solid component comprising at least one high molar mass mercaptan-terminated solid linear polysulphide rubber and removing the water to form a solution of the solid component in the liquid polymer component.

The invention includes modified liquid polymers produced by the above method and industrial compositions

including such a modified liquid polymer, for example with other liquid polymers, fillers, plasticisers, pigments and/or fibres. Such compositions and the modified polymers themselves are useful, for example, as sealants, adhesives or moulding compounds.

The water is preferably removed as a volatile component. This may be effected by heating, under reduced pressure if necessary to reduce the temperature required so as to avoid deterioration of a polymer component.

Modified liquid polymers produced by the method still retain excess mercaptan terminations which are cross-linkable as described above by reaction with epoxide resins, inorganic or organic oxidizing agents or isocyanates to promote cross-linking between the solid and liquid polymer components to produce new cross-linked polymers. These new cross-linked polymers are also useful, either alone or when blended in industrial compositions with other liquid polymers, fillers, plasticisers, pigments and/or fibres as sealants, adhesives, moulding compounds and for other purposes.

In an example, the liquid polysulphide LP 32 sold by Thiokol Chemicals (which includes disulphide linkages in the backbone of the molecular structure) was blended with various quantities of an aqueous latex of the solid polysulphide rubber WD 6, also sold by Thiokol Chemicals. After removal of the water, 15 parts dry weight of manganese dioxide was added (in a paste as described below) per hundred parts dry weight of the blend to promote cross-linking between the solid and liquid components. A sample of LP 32 without any solid component was similarly cross-linked for comparison. Tensile testing of normal dumb-bell-shaped test pieces produced the following results :

| Polymer System (parts by weight) | | Tensile Stress MPa | Tensile Strain per cent |
|---|---|---|---|
| LP 32 | WD 6 | | |
| 100 | 0 | 0.16 | 310 |
| 87 | 13 | 0.24 | 350 |
| 67 | 33 | 0.25 | 340 |

The manganese dioxide paste was produced by mixing the following components (in parts by weight) with a high-speed stirrer :

Manganese dioxide powder 400

Santiciser 261 (a phosphate plasticiser sold by Monsanto) 500

Robac TMT (an amine catalyst sold by Robinson Bros.) 30

Santiciser and Robac are Trade Marks.

## Claims

1. Method of producing a modified liquid polymer comprising a blend of at least one mercaptan-terminated liquid polymer having functional linkages in the backbone with at least one high molar mass mercaptan-terminated solid linear polysulphide rubber, characterised by the steps of blending a liquid polymer component comprising at least one mercaptan-terminated liquid polymer having functional linkages in the backbone with an aqueous latex or dispersion of a solid component comprising at least one high molar mass mercaptan-terminated solid linear polysulphide rubber, and removing the water to form a solution of the solid component in the liquid polymer component.
2. Method as claimed in Claim 1 characterised in that the water is removed as a volatile component.
3. Method as claimed in Claim 2 characterised in that the water is removed by heating the solution.
4. Method as claimed in Claim 3 characterised in that the solution is heated under reduced pressure.
5. Method as claimed in any preceding claim including the further step of adding a curing agent to the modified liquid polymer to promote cross-linking between the solid and liquid components.
6. A modified liquid polymer produced by the method of any preceding claim.
7. An industrial composition including a modified liquid polymer as claimed in Claim 6.
8. A new cross-linked polymer produced by cross-linking a modified liquid polymer as claimed in Claim 6.
9. An industrial composition including a new cross-linked polymer as claimed in Claim 8.